# EUROPEAN PATENT APPLICATION

(11) **EP 4 819 363 A1**
(43) Date of publication of application: **07.10.2026**
(21) Application number: 24897338.0
(22) Date of filing: 15.11.2024
(51) Int. Cl.: H01M 50/533, H01M 10/052, H01M 10/0587, H01M 50/107, H01M 50/119, H01M 50/152, H01M 50/474, H01M 50/477, H01M 50/538

(54) **CYLINDRICAL BATTERY**

(30) Priority: 30.11.2023 JP 2023202983
(71) Applicant: Panasonic Intellectual Property Management Co., Ltd., Kadoma-shi, Osaka 571-0057 (JP)
(72) Inventor: TAKANO Akira, Kadoma-shi, Osaka 571-0057 (JP); MATSUMOTO Taiki, Kadoma-shi, Osaka 571-0057 (JP)
(74) Representative: Eisenführ Speiser
(86) International application number: PCT/JP2024/040624
(87) International publication number: WO 2025/115651

(57) **Abstract**

This cylindrical battery comprises a wound-type electrode body (14), an outer can (16) that has a bottomed cylindrical shape and accommodates the electrode body (14), and a sealing body (17) that closes the opening of the outer can (16), and includes a plurality of positive electrode leads (20) connected to a positive electrode of the electrode body (14). The cylindrical battery further comprises a pressing member (30) that is disposed between the electrode body (14) and the sealing body (17) and presses the electrode body (14) via an insulating plate (18). The pressing member (30) is a conductive member to which the positive electrode leads (20) and the sealing body (17) are connected, and electrically connects the positive electrode leads (20) and the sealing body (17).

## Description

### TECHNICAL FIELD

The present disclosure relates to a cylindrical battery.

### BACKGROUND ART

A cylindrical battery generally comprises a wound electrode assembly of a positive electrode and a negative electrode that are spirally wound with a separator interposed therebetween, a bottomed cylindrical housing can that houses the electrode assembly, and a sealing assembly with which an opening portion of the housing can is capped, and has a structure in which a lead extending from the electrode assembly is connected to the sealing assembly (for example, see PATENT LITERATURE 1). In addition, the housing can of the cylindrical battery has a grooved portion that is formed by an annular groove in an outer peripheral surface and in which a part of an inner peripheral surface projects toward a radially inner side. For example, the grooved portion supports the sealing assembly and holds an outer peripheral portion of the electrode assembly to reduce movement of the electrode assembly.

### CITATION LIST

### PATENT LITERATURE

PATENT LITERATURE 1: International Publication No. WO 2022/270432

### SUMMARY

As described above, the grooved portion of the housing can contributes to displacement reduction of the electrode assembly, but when a large vibration, impact, or the like is applied to the battery, it is supposed that the grooved portion is not enough on its own to reduce the displacement of the electrode assembly. In particular, as the diameter of the cylindrical battery increases, the displacement of the electrode assembly is likely to occur, and thus a deviation in a relative position (what is called winding deviation) among the positive electrode, the negative electrode, and the separator that are included in the electrode assembly may occur.

A cylindrical battery according to the present disclosure comprises a wound electrode assembly, a bottomed cylindrical housing can that houses the electrode assembly, and a sealing assembly with which an opening portion of the housing can is capped, and includes a lead connected to an electrode included in the electrode assembly, the cylindrical battery further comprising a pressing member that is disposed between the electrode assembly and the sealing assembly, and presses the electrode assembly via an insulator, in which the pressing member is a conductive member to which the lead and the sealing assembly are connected such that the lead and the sealing assembly are electrically connected.

According to the cylindrical battery according to the present disclosure, it is possible to reduce occurrence of the displacement of the electrode assembly in the housing can and the winding deviation of the electrode assembly. A configuration of the cylindrical battery according to the present disclosure is preferable for, for example, a large-sized cylindrical battery having a large diameter.

### BRIEF DESCRIPTION OF DRAWING

FIG. 1 is a sectional view of a cylindrical battery of an example of an embodiment.
FIG. 2 is a perspective view of an upper portion of the cylindrical battery of an example of an embodiment, and illustrates a state before a sealing assembly is crimp-fixed.
FIG. 3 is a view illustrating a first modified example of a pressing member.
FIG. 4 is a view illustrating a second modified example of a pressing member.
FIG. 5 is a view illustrating a third modified example of a pressing member.

### DESCRIPTION OF EMBODIMENTS

Hereinafter, an example of embodiments of a cylindrical battery according to the present disclosure will be described in detail with reference to the drawings. Configurations formed by selectively combining the constituent elements of a plurality of embodiments and modified examples described below are included within the scope of the present disclosure.

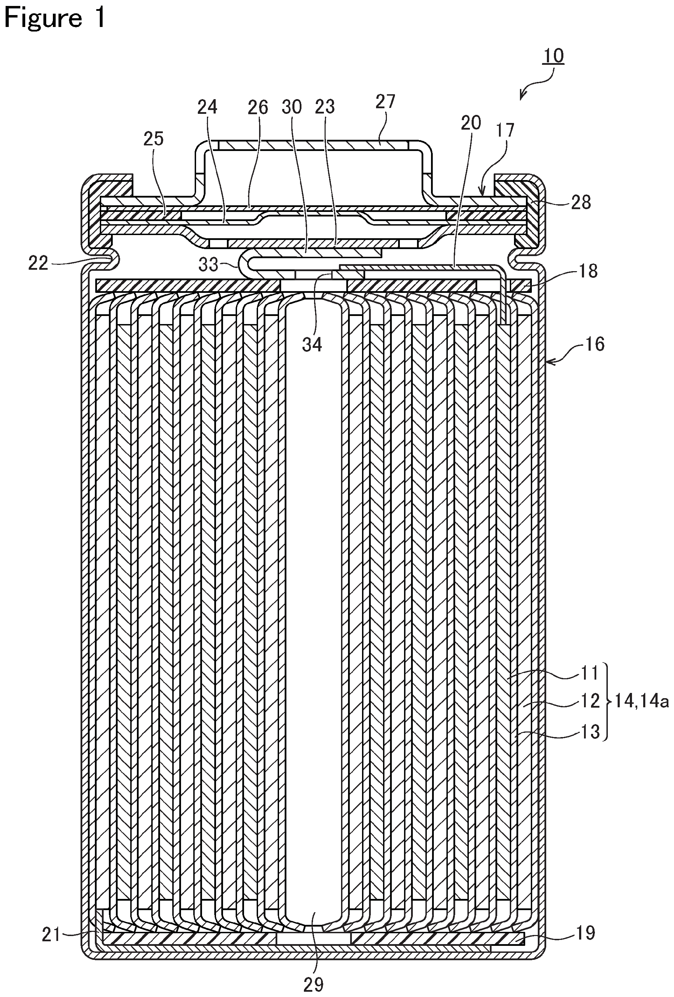

FIG. 1 is a sectional view of a cylindrical battery 10 of an example of an embodiment. As illustrated in FIG. 1, the cylindrical battery 10 comprises a wound electrode assembly 14, an electrolyte, a bottomed cylindrical housing can 16 that houses the electrode assembly 14 and the electrolyte, and a sealing assembly 17 with which an opening portion of the housing can 16 is capped. The electrode assembly 14 has a positive electrode 11, a negative electrode 12, and a separator 13, and has a wound structure in which the positive electrode 11 and the negative electrode 12 are spirally wound with the separator 13 interposed therebetween. Hereinafter, for convenience of description, the sealing assembly 17 side of the battery will be described as "the upper side", and the bottom side of the housing can 16 will be described as "the lower side".

Each of the positive electrode 11, the negative electrode 12, and the separator 13 constituting the electrode assembly 14 is a band-shaped elongate body, and the positive electrode 11, the negative electrode 12, and the separator 13 are spirally wound so as to be alternately stacked in a radial direction of the electrode assembly 14. The negative electrode 12 is formed to be slightly larger than the positive electrode 11 in order to prevent precipitation of lithium. That is, the negative electrode 12 is formed to be longer in the longitudinal direction and the width direction than the positive electrode 11. The two separators 13 are each formed to be slightly larger than at least the positive electrode 11, and are disposed so as to interpose, for example, the positive electrode 11 therebetween. The electrode assembly 14 has a positive electrode lead 20 connected to the positive electrode 11 by welding or the like, and a negative electrode lead 21 connected to the negative electrode 12 by welding or the like.

Although described in detail below, the cylindrical battery 10 includes a plurality of positive electrode leads 20. The cylindrical battery 10 further comprises a pressing member 30 that is disposed between the electrode assembly 14 and the sealing assembly 17 and presses the electrode assembly 14 via an insulator. The pressing member 30 is a conductive member to which the positive electrode leads 20 and the sealing assembly 17 are connected such that the positive electrode leads 20 and the sealing assembly 17 are electrically connected. That is, the pressing member 30 functions as a positive electrode current collecting member forming a part of a current pathway of the positive electrode 11. Alternatively, a negative electrode lead is connected to the pressing member, so that the pressing member can also function as a negative electrode current collecting member.

The positive electrode 11 has a positive electrode core, and a positive electrode mixture layer disposed on the positive electrode core. For the positive electrode core, a foil of metal such as aluminum, an aluminum alloy, stainless steel, or titanium, which is stable within a potential range of the positive electrode 11, a film in which such a metal is disposed on a surface layer thereof, or the like can be used. The positive electrode mixture layer includes a positive electrode active material, a conductive agent, and a binder, and is preferably provided on each surface of the positive electrode core except for portions to which the positive electrode leads 20 are connected. For the positive electrode active material, a lithium-transition metal composite oxide containing a transition metal element such as Ni, Co, and Mn is used.

The negative electrode 12 has a negative electrode core, and a negative electrode mixture layer disposed on the negative electrode core. For the negative electrode core, a foil of metal such as copper, a copper alloy, stainless steel, nickel, or a nickel alloy, which is stable within a potential range of the negative electrode 12, a film in which such a metal is disposed on a surface layer thereof, or the like can be used. The negative electrode mixture layer includes a negative electrode active material, and a binder, and is preferably provided on each surface of the negative electrode core except for a portion to which a negative electrode lead 21 is connected. For the negative electrode active material, a carbon material that reversibly occludes and releases lithium ions is generally used. For the negative electrode active material, an element such as Si or Sn that forms an alloy with Li, a material containing such an element, or the like may be used.

For the separator 13, a porous sheet having an ion permeation property and an insulation property is used. Specific examples of the porous sheet include a fine porous thin film, a woven fabric, and a nonwoven fabric. As a material of the separator 13, polyolefin such as polyethylene or polypropylene, or a cellulose is preferable. The separator 13 may have a single-layer structure or a multi-layer structure. The separator 13 may have a multi-layer structure including a thermoplastic resin layer such as polyolefin and a cellulose fiber layer, a two-layer structure of polyethylene (PE) and polypropylene (PP), or a three-layer structure of PE, PP, and PE.

The electrolyte may be an aqueous electrolyte, but in the present embodiment, a non-aqueous electrolyte is used. The non-aqueous electrolyte has lithium ion conductivity. The non-aqueous electrolyte may be a liquid electrolyte (electrolyte solution), or may be a solid-state electrolyte.

The liquid electrolyte (electrolyte solution) includes a non-aqueous solvent, and an electrolyte salt dissolved in the non-aqueous solvent. For the non-aqueous solvent, for example, esters, ethers, nitriles, amides, or mixed solvents of two of more of these are used. Examples of the non-aqueous solvent include ethylene carbonate (EC), ethylmethyl carbonate (EMC), dimethyl carbonate (DMC), diethyl carbonate (DEC), and mixed solvents of these. The non-aqueous solvent may contain a halogen-substituted product (for example, fluoroethylene carbonate) obtained by substituting at least a part of hydrogen in these solvents with a halogen atom such as fluorine. For the electrolyte salt, for example, a lithium salt such as LiPF₆ is used.

As a solid-state electrolyte, for example, a solid-state or gel-state polymer electrolyte, an inorganic solid-state electrolyte, or the like can be used. As the inorganic solid-state electrolyte, a material known in an all-solid-state lithium ion secondary battery and the like (for example, an oxide-based solid-state electrolyte, a sulfide-based solid-state electrolyte, and a halide-based solid-state electrolyte) can be used. The polymer electrolyte includes, for example, a lithium salt and a matrix polymer, or a non-aqueous solvent, a lithium salt, and a matrix polymer. As the matrix polymer, for example, a polymer material which absorbs and gels the non-aqueous solvent is used. Examples of the polymer material include fluororesin, acrylic resin, and polyether resin.

Insulating plates 18 and 19 are disposed on the upper and lower sides of the electrode assembly 14, respectively. In the example illustrated in FIG. 1, the positive electrode lead 20 extends toward the sealing assembly 17 side through a through hole in the insulating plate 18, and the negative electrode lead 21 passes along the outside of the insulating plate 19 and extends toward the bottom side of the housing can 16. The pressing member 30 to which the plurality of positive electrode leads 20 are connected is connected to a lower surface of an internal terminal plate 23 of the sealing assembly 17 by welding or the like, so that a cap 27 which is a top plate of the sealing assembly 17 electrically connected to the internal terminal plate 23 serves as a positive electrode terminal. The negative electrode lead 21 is connected to a bottom inner surface of the housing can 16 by welding or the like, so that the housing can 16 serves as a negative electrode terminal. The housing can 16 and the sealing assembly 17 are connected to an external circuit such as other batteries configuring a battery module or a charger.

The housing can 16 is a bottomed cylindrical metallic housing can in which one side in the axial direction opens, and the opening portion of the housing can 16 is sealed with the sealing assembly 17. A gasket 28 is provided between the housing can 16 and the sealing assembly 17 to achieve sealability inside the battery. The housing can 16 has a grooved portion 22 formed by causing a part of a side surface portion to project inward and configured to support the sealing assembly 17. The grooved portion 22 is preferably formed annularly along the circumferential direction of the housing can 16, and supports the sealing assembly 17 on its upper surface. The sealing assembly 17 is fixed to an upper portion of the housing can 16 by the grooved portion 22 and an opening end portion of the housing can 16 which is crimped to the sealing assembly 17.

The sealing assembly 17 has a laminate structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected to each other at respective central portions, and the insulating member 25 is interposed between respective peripheral edge portions. If the internal pressure of the battery increases due to abnormal heat generation, the lower vent member 24 is deformed so as to push up the upper vent member 26 toward the cap 27 side and ruptures, resulting in cutting off of a current pathway between the lower vent member 24 and the upper vent member 26. If the internal pressure further increases, the upper vent member 26 ruptures, and gas is discharged through an opening portion of the cap 27.

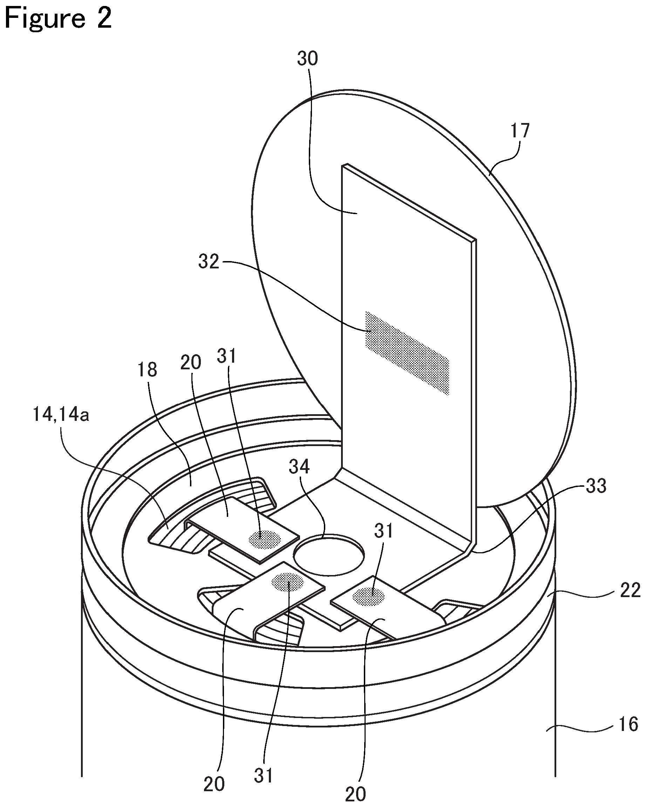

Hereinafter, the positive electrode leads 20 and the pressing member 30 will be described in detail further with reference to FIG. 2. FIG. 2 is a perspective view of an upper portion of the cylindrical battery 10, and illustrates a state before the opening portion of the housing can 16 is sealed with the sealing assembly 17.

As illustrated in FIGS. 1 and 2, the electrode assembly 14 includes a plurality of positive electrode leads 20 connected to the positive electrode 11. The plurality of positive electrode leads 20 extend in a direction of the sealing assembly 17 from an upper end of an electrode group 14a constituting the electrode assembly 14, and are connected to the pressing member 30 disposed on the insulating plate 18. The electrode group 14a means a wound body including the positive electrode 11, the negative electrode 12, and the separator 13, and a hollow portion 29 is formed in a winding core of the electrode group 14a. The hollow portion 29 is a space extending in the axial direction of the electrode group 14a. The pressing member 30 is a conductive member connected to the sealing assembly 17, so that the positive electrode leads 20 are electrically connected to the sealing assembly 17 via the pressing member 30.

Each positive electrode lead 20 is a strip-shaped conductive member, and is made of, for example, a metal containing aluminum as a main component. The constituent material of the positive electrode leads 20 is preferably an aluminum alloy. The aluminum alloy is an alloy formed by adding one or more of other metal elements such as copper, manganese, silicon, magnesium, zinc, and nickel to aluminum, so that the electrical resistance, hardness, and the like of the material can be changed by adjusting the kind and amount of the added elements.

The width and thickness of the positive electrode leads 20 change depending on the size, capacity, and the like of the battery, but the width of the positive electrode leads 20 is, for example, greater than or equal to 2 mm and less than or equal to 15 mm, or greater than or equal to 3 mm and less than or equal to 10 mm. The thickness of the positive electrode leads 20 is, for example, greater than or equal to 0.03 mm and less than or equal to 0.15 mm, or greater than or equal to 0.05 mm and less than or equal to 0.10 mm. The plurality of positive electrode leads 20 may have different widths and thicknesses, but in the example illustrated in FIG. 2, all of the positive electrode leads 20 have substantially the same width and thickness.

The positive electrode leads 20 are welded to a core of the positive electrode 11. In the positive electrode 11, a plurality of core exposed portions where a surface of the positive electrode core is exposed without providing the positive electrode mixture layer on the positive electrode core are provided so as to be spaced away from each other in a length direction of the positive electrode 11. The positive electrode leads 20 are connected to the exposed portions in a one-to-one manner by welding or the like. The positive electrode leads 20 are generally joined to only one surface of the positive electrode core, but the core exposed portions are provided on both surfaces of the positive electrode 11. The core exposed portions are formed, for example, in an overlapping manner in the thickness direction of the positive electrode 11 so as to have substantially the same size. The welding position of the positive electrode lead 20 in each exposed portion is any position that allows the positive electrode lead 20 to be disposed within a range of the core exposed portion so as not to overlap the positive electrode mixture layer.

In the mode illustrated in FIG. 2, three positive electrode leads 20 are provided, so that the core exposed portions are formed at three positions spaced apart from each other in the length direction of the positive electrode 11. The intervals between the exposed portions may be uniform or may vary, but the layout of the positive electrode leads 20 is set as appropriate according to the battery performance of the cylindrical battery 10 such as the capacity and the output characteristic. Therefore, the intervals between the core exposed portions are determined according to the layout and the like. The number of the positive electrode leads 20 may be one, but, in the large-sized battery, it may be preferably plural, and may be, for example, greater than or equal to two and less than or equal to 15.

The pressing member 30 is disposed between the electrode assembly 14 and the sealing assembly 17, and presses the electrode assembly 14 via the insulator to reduce occurrence of the movement of the electrode assembly 14 in the housing can 16 and the winding deviation of the electrode assembly 14. The outer peripheral portion of the electrode assembly 14 can be held by the grooved portion 22, so that the pressing member 30 is preferably provided at a position apart from the grooved portion 22 and overlapping a radially inner portion of the electrode assembly 14 in its axial direction. In the present embodiment, the housing can 16 in which the grooved portion 22 is formed functions as the negative electrode terminal, so that the pressing member 30 is disposed so as not to contact the grooved portion 22.

The pressing member 30 is a conductive member to which the plurality of positive electrode leads 20 are welded and which is welded to the sealing assembly 17, and functions as a positive electrode current collecting member. The constituent material of the pressing member 30 is not limited to a particular material, but, similarly to the positive electrode leads 20, the pressing member 30 is made of, for example, a metal containing aluminum as a main component. A preferable example of the constituent material of the pressing member 30 is an aluminum alloy. In the pressing member 30, a welding portion 32 with the sealing assembly 17 and welding portions 31 with the positive electrode lead 20 are formed.

The pressing member 30 is disposed above the electrode assembly 14 via the insulating plate 18. The pressing member 30 is disposed on the insulating plate 18, but may be fixed to the insulating plate 18. The insulator interposed between the electrode assembly 14 and the pressing member 30 is not limited to the insulating plate 18, and may be, for example, an insulator included in the electrode assembly 14 or the pressing member 30. Examples of the insulator other than the insulating plate 18 include the separator 13 included in the electrode assembly 14, and an insulating layer provided on a surface of the pressing member 30 that faces the electrode assembly 14.

The pressing member 30 is disposed above the winding core (center axis) of the electrode assembly 14. In the present embodiment, the electrode assembly 14 has a hollow portion 29 formed in the winding core, and the pressing member 30 is disposed above the hollow portion 29. That is, the pressing member 30 is provided at a position overlapping the hollow portion 29 in the axial direction of the electrode assembly 14. The pressing member 30 has width and length larger than the diameter of the hollow portion 29, and is disposed to cover an entirety of the hollow portion 29 and to cover the radially inner portion of the electrode assembly 14. The pressing member 30 is disposed above the winding core of the electrode assembly 14, so that the displacement of the electrode assembly 14 can be reduced more effectively.

The pressing member 30 has a through hole 34 in a portion overlapping the hollow portion 29. The hollow portion 29 of the electrode assembly 14 serves as a gas discharge pathway when an abnormality occurs in the battery and gas is generated. Therefore, the through hole 34 is preferably formed in the pressing member 30 to ensure the gas discharge pathway. That is, the through hole 34 functions as a vent. The pressing member 30 is disposed such that at least a part of the through hole 34 overlaps the hollow portion 29 in the axial direction of the electrode assembly 14. In the example illustrated in FIG. 2, the positive electrode leads 20 are welded to the periphery of the through hole 34 in the pressing member 30 so as not to cover the through hole 34.

In the pressing member 30, a plurality of welding portions 31 are formed to surround the through hole 34. The positive electrode leads 20 are welded to a first surface (upper surface) of the pressing member 30 facing a direction of the sealing assembly 17, are welded to a second surface (lower surface) of the pressing member 30 facing a direction of the electrode assembly 14, or are welded to both of the first and second surfaces. In the example illustrated in FIG. 2, all of the positive electrode leads 20 are welded to the upper surface of the pressing member 30. In this case, good welding portions 31 can be easily formed and the reliability of the welding portions 31 can also be improved. The welding portions 31 may also be formed on the hollow portion 29 of the electrode assembly 14. In this case, the welding portions 31 can be formed by inserting a jig used for welding into the hollow portion 29.

The through hole 34 is formed through the pressing member 30 in the axial direction of the electrode assembly 14, and in the example illustrated in FIG. 2, has a perfect circular shape in a plan view. In addition, in the insulating plate 18, a through hole is formed at a position overlapping the through hole 34. In a plan view of the electrode assembly 14 and the pressing member 30, the through hole 34 is larger than the hollow portion 29, and thus, the pressing member 30 may be disposed above the electrode assembly 14 so that an entirety of the hollow portion 29 is exposed through the through hole 34. The pressing member 30 is disposed, for example, so that a center of the through hole 34 overlaps a center axis of the electrode assembly 14.

The pressing member 30 is a plate-shaped member whose widthwise cross-sectional area is larger than that of the positive electrode lead 20, and has a bent portion 33 at a middle portion in the length direction so as to be elastically deformed in the axial direction of the electrode assembly 14. Although described in detail below, the pressing member 30 is disposed between the electrode assembly 14 and the sealing assembly 17 in a state of being bent at the bent portion 33 and compressed, and thus functions as a spring pressing the electrode assembly 14 via the insulating plate 18. The bent portion 33 is formed by bending a metal plate constituting the pressing member 30. In addition, the bent portion 33 is formed in parallel to the width direction of the pressing member 30. On the bent portion 33, a half-cut line, a cutout, or the like may be formed. The bent portion 33 is formed at at least one place, but a plurality of bent portions 33 may be formed in the length direction of the pressing member 30.

The pressing member 30 is preferably wider and thicker than the positive electrode lead 20. On the other hand, the length of the pressing member 30 is not limited to a particular length, and may be shorter than the positive electrode lead 20. The pressing member 30 is, for example, a metal plate having a substantially constant width and thickness over the entire length. The dimensions of the pressing member 30 can be changed as appropriate according to the size or the like of the cylindrical battery 10, but, for example, the width of the pressing member 30 is greater than or equal to 10 mm and less than or equal to 30 mm, or greater than or equal to 15 mm and less than or equal to 25 mm. The thickness of the pressing member 30 is, for example, greater than or equal to 0.1 mm and less than or equal to 1.0 mm, or greater than or equal to 0.2 mm and less than or equal to 0.5 mm.

In the pressing member 30, the width is larger than the thickness. A ratio of width to thickness of the pressing member 30 is preferably greater than or equal to 30 times and less than or equal to 100 times, more preferably greater than or equal to 40 times and less than or equal to 90 times, and particularly preferably greater than or equal to 50 times and less than or equal to 80 times. In this case, it is possible to efficiently exhibit a good spring property of the pressing member 30. When at least one of the thickness and the width of the pressing member 30 is not constant, it is preferable that a ratio of the average width to the average thickness of the pressing member 30 or a ratio of maximum width to maximum thickness falls within the range.

The widthwise cross-sectional area of the pressing member 30 is larger than the widthwise cross-sectional area of the positive electrode lead 20, and is preferably greater than or equal to 5 times and less than or equal to 100 times the widthwise cross-sectional area of the positive electrode lead 20. It is more preferably greater than or equal to 10 times and less than or equal to 50 times, and particularly preferably greater than or equal to 15 times and less than or equal to 30 times. In this case, it is possible to efficiently exhibit a good spring property of the pressing member 30 while reducing problems such as contact between the housing can 16 and the pressing member 30, and a reduction in energy density. When the widthwise cross-sectional area of at least one of the positive electrode lead 20 and the pressing member 30 is not constant, it is preferable that a ratio between the average widthwise cross-sectional areas of the members or a ratio between maximum values of the members falls within the range. The pressing member 30 is preferably formed to be wider and thicker than the positive electrode lead 20 to increase the widthwise cross-sectional area.

The thickness of the pressing member 30 is, for example, greater than or equal to 1.5 times and less than or equal to 15 times the thickness of the positive electrode lead 20, and preferably greater than or equal to 2 times and less than or equal to 10 times. When the thickness of at least one of the positive electrode lead 20 and the pressing member 30 is not constant, it is preferable that a ratio between the average thicknesses of the members or a ratio between maximum values of the members falls within the range (the same also applies to the width). The width of the pressing member 30 is, for example, greater than or equal to 1.5 times and less than or equal to 10 times the width of the positive electrode lead 20, and preferably greater than or equal to 2 times and less than or equal to 6 times.

The maximum width of the pressing member 30 is preferably greater than or equal to 30% and less than or equal to 90% of the minimum inner diameter of the housing can 16, more preferably greater than or equal to 35% and less than or equal to 80%, and particularly preferably greater than or equal to 40% and less than or equal to 70%. In the present embodiment, the inner diameter of the housing can 16 is minimized at a portion where the grooved portion 22 is formed. When a ratio of the maximum width of the pressing member 30 to the minimum inner diameter of the housing can 16 is within the range, it is possible to efficiently exhibit a good spring property of the pressing member 30 while reducing problems such as contact between the housing can 16 and the pressing member 30, and a reduction in energy density, and it becomes easy to weld the positive electrode leads 20.

In the pressing member 30, a portion (hereinafter, referred to as a "first region") in which the welding portions 31 with the positive electrode leads 20 are formed is disposed to be along the radial direction of the electrode assembly 14 on the insulating plate 18. A portion (hereinafter, referred to as a "second region") in which the welding portion 32 with the sealing assembly 17 is formed is disposed to be along the lower surface of the sealing assembly 17. In the present embodiment, the bent portion 33 becomes a boundary between the first regions and the second region. The bent portion 33 is disposed at a radially outer side of the housing can 16 than one end of the pressing member 30 in the length direction that exists in the first region, and is in close proximity to the grooved portion 22.

The width of the pressing member 30 may change along the length direction. The width of the pressing member 30 may be changed to prevent a contact with the housing can 16 while increasing the width of the pressing member 30, so that the width of the portion where the bent portion 33 is formed is smaller than that of one end portion in the length direction. That is, the width of the pressing member 30 may be smaller at the portion where the bent portion 33 is formed than at the one end portion in the length direction on the electrode assembly 14 side. The width of the first region of the pressing member 30 may be gradually reduced from the one end portion in the length direction toward the bent portion 33, and may be reduced step by step at at least one place. The width of the pressing member 30 at the bent portion 33 is, for example, less than or equal to 90% of the width at the one end portion in the length direction, and may be greater than or equal to 30% and less than or equal to 80%, or greater than or equal to 50% and less than or equal to 70%. The width of the second region of the pressing member 30 may be substantially the same as the width of the pressing member 30 at the bent portion 33 over the entire length, or may increase from the bent portion 33.

The pressing member 30 is, for example, bent in an L shape at the bent portion 33, and has an L shape in a state in which an external force does not act thereon. When the sealing assembly 17 is crimp-fixed to an opening edge portion of the housing can 16, the pressing member 30 is bent at the bent portion 33 so that the first region faces the second region, and is disposed between the electrode assembly 14 and the sealing assembly 17 in a state of being compressed in the axial direction of the electrode assembly 14. In this case, since the compressed pressing member 30 attempts to return into the original L shape, the pressing member 30 functions as a spring pressing the electrode assembly 14 via the insulating plate 18, so that the pressing member 30 can apply a biasing force pressing the electrode assembly 14 from above. The first region and the second region of the pressing member 30 may be disposed, for example, substantially in parallel to each other to face each other at a slight interval, and may hold the positive electrode leads 20 welded to the upper surface of the first region therebetween.

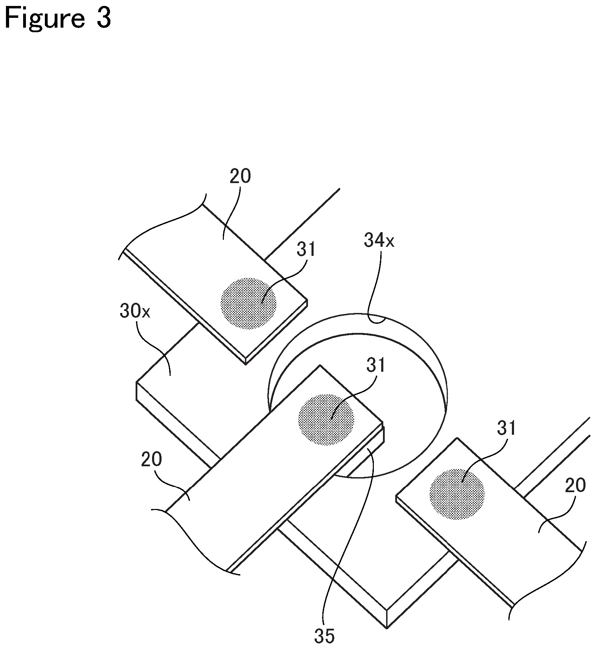

Hereinafter, another example of the embodiment will be described with reference to FIGS. 3 to 5. In the following description, the same reference numerals are used for similar configurations to the above-described embodiment, and redundant description thereof is omitted.

A pressing member 30x illustrated in FIG. 3 has a projection 35 projecting from a part of an edge of a through hole 34x toward a center of the hole. Then, one positive electrode lead 20 is welded on an upper surface of the projection 35. The pressing member 30x is disposed such that the through hole 34x overlaps a hollow portion 29 in the axial direction of an electrode assembly 14, similarly to the pressing member 30. According to the pressing member 30x, a gas discharge pathway in occurrence of an abnormality in the battery can be formed while securing the welding portions for the leads. The through hole 34x is formed, for example, substantially in a C shape in a plan view. The shape of the through hole is not limited to a perfect circular shape and a C shape, and may be, for example, a polygonal shape, a cross shape, a semicircular shape, or the like.

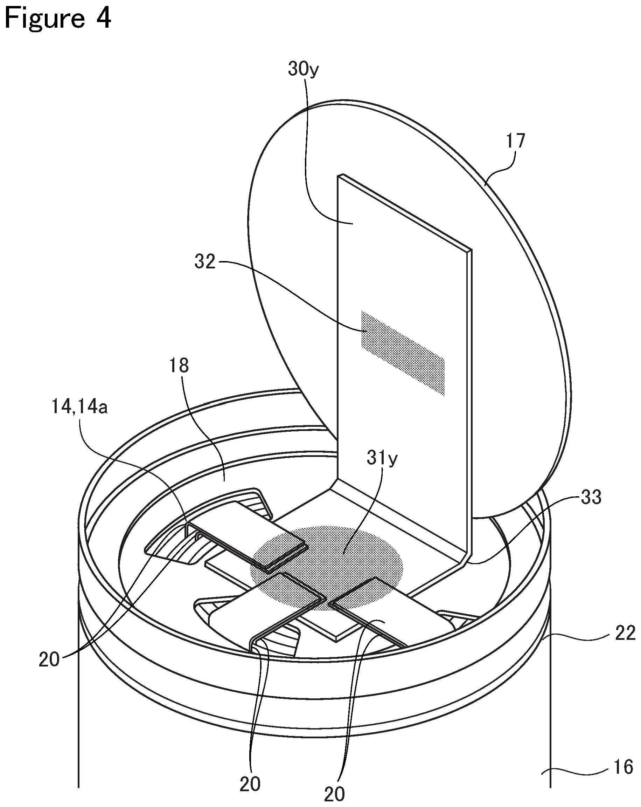

An electrode assembly 14y illustrated in FIG. 4 is different from the electrode assembly 14 in that six positive electrode leads 20 are disposed to overlap in pairs. Furthermore, a pressing member 30y has no through hole 34, and the six positive electrode leads 20 are welded to an upper surface of the pressing member 30y in a state in which tip ends thereof are in close proximity to each other. A welding portion 31y is formed, for example, at a position overlapping a hollow portion 29 in the axial direction of the electrode assembly 14. The pairs of the positive electrode leads 20 can be connected to the front and back of one positive electrode core in a state in which the core is sandwiched between the positive electrode leads 20, but as illustrated in FIG. 4, the two positive electrode leads 20 preferably extend from positions that are apart in the radial direction of the electrode assembly 14y and arranged in the radial direction.

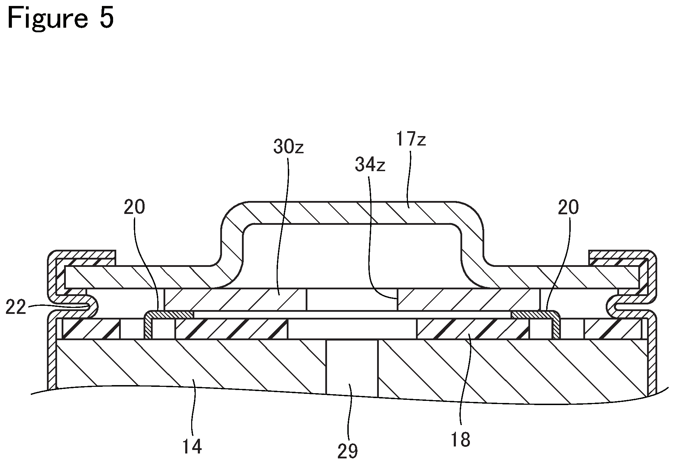

The mode illustrated in FIG. 5 is common to the above-described embodiment in that a pressing member 30z is provided which is disposed between an electrode assembly 14 and a sealing assembly 17z and presses the electrode assembly 14 via an insulating plate 18 which is an insulator. The pressing member 30z is a conductive member to which positive electrode leads 20 and the sealing assembly 17z are connected such that the positive electrode leads 20 and the sealing assembly 17z are electrically connected. On the other hand, the pressing member 30z is different from the pressing members 30, 30x, and 30y in that the pressing member 30z is a flat plate-shaped or block-shaped member having no bent portion, and does not function as a spring that is elastically deformed in the axial direction of the electrode assembly 14. In addition, the positive electrode leads 20 are welded to only a lower surface of the pressing member 30z.

The pressing member 30z is not configured to apply a biasing force to the electrode assembly 14, but the electrode assembly 14 is pressed by the sealing assembly 17z from above, and the force is used to press the electrode assembly 14 via the insulating plate 18, thereby reducing the displacement and winding deviation of the electrode assembly 14. The sealing assembly 17z is crimp-fixed to the opening edge portion of the housing can 16, so that the pressing member 30z is pressed from above. A welding portion between the sealing assembly 17z and the pressing member 30z is formed by, for example, emitting laser light from an upper surface of the sealing assembly 17z. In the example illustrated in FIG. 5, a through hole 34z is formed at a portion overlapping a hollow portion 29 of the electrode assembly 14 in the pressing member 30z.

As described above, according to the cylindrical battery comprising the above-described configuration, the pressing member presses the radially inner portion of the electrode assembly 14 from above, so that the displacement of the electrode assembly 14 in the housing can 16 and the winding deviation of the electrode assembly 14 can be effectively reduced. The outer peripheral portion of the electrode assembly 14 is pressed by the grooved portion 22, and the radially inner portion in the proximity of the winding core is pressed by the pressing member. The above-described configuration is preferable particularly for a large-sized cylindrical battery comprising the electrode assembly 14 with a large diameter.

When the pressing member 30 is disposed between the electrode assembly 14 and the sealing assembly 17 in a state in which the bent metal plate is compressed, the pressing member 30 functions as a spring that is elastically deformed in the axial direction of the electrode assembly 14, so that the pressing member 30 can apply a biasing force pressing the electrode assembly 14 from above. In this case, it is possible to effectively reduce the displacement of the electrode assembly 14 and reduce the thickness and weight of the pressing member 30, and it is easy to assemble the battery and design the dimensions of the battery.

Note that the embodiment described above can be changed in design as appropriate within a range that does not impair the object of the present disclosure, and may include modes obtained by selectively combining constituent elements of the plurality of embodiments described above. For example, in the mode illustrated in FIG. 2, the number of the positive electrode leads 20 may be six as in the mode illustrated in FIG. 4. In addition, a plurality of pressing members can be arranged between the electrode assembly and the sealing assembly.

The present disclosure is further described by the following embodiments.

### Configuration 1:

A cylindrical battery comprising: a wound electrode assembly; a bottomed cylindrical housing can that houses the electrode assembly; and a sealing assembly with which an opening portion of the housing can is capped, the cylindrical battery including a lead connected to the electrode assembly, the cylindrical battery further comprising a pressing member that is disposed between the electrode assembly and the sealing assembly and presses the electrode assembly via an insulator, wherein the pressing member is a conductive member to which the lead and the sealing assembly are connected such that the lead and the sealing assembly are electrically connected.

### Configuration 2:

The cylindrical battery described in configuration 1, wherein the pressing member is a plate-shaped member whose widthwise cross-sectional area is larger than a widthwise cross-sectional area of the lead, and has a bent portion at a middle portion in a length direction so as to be elastically deformed in an axial direction of the electrode assembly.

### Configuration 3:

The cylindrical battery described in configuration 1 or 2, wherein a widthwise cross-sectional area of the pressing member is greater than or equal to 5 times and less than or equal to 100 times a widthwise cross-sectional area of the lead.

### Configuration 4:

The cylindrical battery described in any one of configurations 1 to 3, wherein a maximum width of the pressing member is greater than or equal to 30% and less than or equal to 90% of a minimum inner diameter of the housing can.

### Configuration 5:

The cylindrical battery described in any one of configurations 1 to 4, wherein a ratio of a width to a thickness of the pressing member is greater than or equal to 50 times and less than or equal to 100 times.

### Configuration 6:

The cylindrical battery described in configuration 2, wherein a width of the pressing member is smaller at the portion where the bent portion is formed than at one end portion in a length direction on a side of the electrode assembly.

### Configuration 7:

The cylindrical battery described in any one of configurations 1 to 6, wherein the electrode assembly has a hollow portion formed in a winding core, and the pressing member is disposed above the hollow portion and has a through hole at a portion that overlaps the hollow portion.

### Configuration 8:

The cylindrical battery described in any one of configurations 1 to 7, wherein the lead is welded to a first surface of the pressing member facing a direction of the sealing assembly, is welded to a second surface of the pressing member facing a direction of the electrode assembly, or is welded to both of the first and the second surfaces.

### REFERENCE SIGNS LIST

10 Cylindrical battery, 11 Positive electrode, 12 Negative electrode, 13 Separator, 14 Electrode assembly, 14a Electrode group, 16 Housing can, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket, 29 Hollow portion, 30 Pressing member, 31, 32 Welding portion, 33 Bent portion, 34 Through hole

## Claims

1. A cylindrical battery comprising:
a wound electrode assembly;
a bottomed cylindrical housing can that houses the electrode assembly; and
a sealing assembly with which an opening portion of the housing can is capped,
the cylindrical battery including a lead connected to an electrode included in the electrode assembly,
the cylindrical battery further comprising a pressing member that is disposed between the electrode assembly and the sealing assembly, and presses the electrode assembly via an insulator, wherein
the pressing member is a conductive member to which the lead and the sealing assembly are connected such that the lead and the sealing assembly are electrically connected.

2. The cylindrical battery according to claim 1, wherein
the pressing member is a plate-shaped member whose widthwise cross-sectional area is larger than a widthwise cross-sectional area of the lead, and has a bent portion at a middle portion in a length direction so as to be elastically deformed in an axial direction of the electrode assembly.

3. The cylindrical battery according to claim 2, wherein
a widthwise cross-sectional area of the pressing member is greater than or equal to 5 times and less than or equal to 100 times a widthwise cross-sectional area of the lead.

4. The cylindrical battery according to claim 2, wherein
a maximum width of the pressing member is greater than or equal to 30% and less than or equal to 90% of a minimum inner diameter of the housing can.

5. The cylindrical battery according to claim 2, wherein
a ratio of a width to a thickness of the pressing member is greater than or equal to 30 times and less than or equal to 100 times.

6. The cylindrical battery according to claim 2, wherein
a width of the pressing member is smaller at the portion where the bent portion is formed than at one end portion in a length direction on a side of the electrode assembly.

7. The cylindrical battery according to claim 1 or 2, wherein
the electrode assembly has a hollow portion formed in a winding core, and
the pressing member is disposed above the hollow portion and has a through hole at a portion that overlaps the hollow portion.

8. The cylindrical battery according to any one of claims 1 to 7, wherein
the lead is welded to a first surface of the pressing member facing a direction of the sealing assembly, is welded to a second surface of the pressing member facing a direction of the electrode assembly, or is welded to both of the first and the second surfaces.
